# EUROPÄISCHE PATENTSCHRIFT

(11) **EP 2 921 716 B1**
(45) Veröffentlichungstag und Bekanntmachung des Hinweises auf die Patenterteilung: **17.07.2019**
(21) Anmeldenummer: 15158652.6
(22) Anmeldetag: 11.03.2015
(51) Int. Cl.: F04D 29/54, F01D 5/14, F01D 9/04, F01D 25/24, F04D 29/64

(54) **SCHAUFELREIHENGRUPPE**
stator blade GROUP
GROUPE DE SÉRIE D'AUBES

(30) Priorität: 20.03.2014 DE 102014205226
(43) Veröffentlichungstag der Anmeldung: 23.09.2015
(73) Patentinhaber: Rolls-Royce Deutschland Ltd & Co KG, 15827 Blankenfelde-Mahlow (DE)
(72) Erfinder: Gümmer, Volker, 85411 Hohenkammer (DE)
(74) Vertreter: Maikowski & Ninnemann Patentanwälte Partnerschaft mbB

(56) Entgegenhaltungen:
- EP-A1- 2 626 512
- EP-A1- 2 833 001
- EP-A2- 1 122 407

## Beschreibung

Die Erfindung betrifft eine Schaufelreihengruppe gemäß dem Oberbegriff des Anspruchs 1. Insbesondere betrifft die Erfindung eine Stator-Schaufelreihengruppe.

Die aerodynamische Belastbarkeit und die Effizienz von Strömungsmaschinen, insbesondere Bläsern, Verdichtern, Turbinen, Pumpen und Ventilatoren, wird durch das Wachstum und die Ablösung von Grenzschichten in der Nähe und auf den Naben- und Gehäusewänden begrenzt. Der Stand der Technik hält für den Fall hoher aerodynamischer Belastung und starken Grenzschichtwachstums auf den Ringkanalseitenwänden (Nabe oder Gehäuse) nur bedingt Lösungen bereit.

Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Derartige Strömungsmaschinen sind beispielsweise aus der EP 2 261 463 A2, der EP 1 122 407 A2, der EP 2 626 512 A1 und der DE 4 223 965 A1 bekannt. Bei diesen Anordnungen, und insbesondere bei denen, die mehrere direkt benachbarte und relativ zueinander fest angeordnete Schaufelreihen aufweisen (also beispielsweise mehrere Rotorschaufelreihen auf der selben Trommel oder mehrere Statorschaufelreihen), ergeben sich bei höherer aerodynamischer Belastung starke Grenzschichtablösung in der Randzone des Hauptströmungspfades, d. h. an der Naben- oder der Gehäusekontur.

Zum Stand der Technik gehören auch doppelreihige Verstellleiträder, deren Schaufeln an Nabe und Gehäuse auf einem Drehteller angeordnet sind, um sie im Anstellwinkel verdrehen zu können.

In jedem Fall ergibt sich in Schaufelgruppenanordnungen wegen der beabsichtigten axial engen Beabstandung der Mitgliedschaufelreihen die Problematik, dass die Fixierung der beteiligten Schaufeln an der Nabe und im Gehäuse konstruktiv schwer zu realisieren ist, so dass neuartige Lösungen erforderlich sind, um eine kompakte Bauweise der Maschine zu erreichen. Dies gilt insbesondere für Statorschaufelreihengruppen.

Der vorliegenden Erfindung liegt die Aufgabe zu Grunde, eine Schaufelreihengruppe bereitzustellen, die eine konstruktiv kompakte Realisierung der Fixierung der Schaufeln der Schaufelreihengruppe an mindestens einer der Hauptströmungspfadberandungen ermöglicht.

Diese Aufgabe wird erfindungsgemäß durch eine Schaufelreihengruppe mit den Merkmalen des Anspruchs 1 gelöst.

Danach stellt die erfindungsgemäße Lösung eine Schaufelreihengruppe bereit, die in einem Hauptströmungspfad einer Strömungsmaschine anordbar ist und aus N benachbarten und sowohl in Meridionalrichtung als auch in Umfangsrichtung relativ zueinander fest angeordneten Mitgliedsschaufelreihen besteht. Dabei sind eine vordere Mitgliedsschaufelreihe mit vorderen Schaufeln mit Vorderkante und Hinterkante sowie eine hintere Mitgliedsschaufelreihe mit hinteren Schaufeln mit Vorderkante und Hinterkante gegeben und weist die Schaufelreihengruppe zwei Hauptströmungspfadberandungen auf.

Es ist erfindungsgemäß vorgesehen, dass das Schaufelprofil der Schaufeln der Mitgliedsschaufelreihen an wenigstens einer der beiden Hauptströmungspfadberandungen fest mit einer Basis verbunden ist, wobei wenigstens ein Schaufelprofil einer Schaufel einer der beiden Mitgliedschaufelreihen zumindest angrenzend an die Hauptströmungspfadberandung über seine Basis hinaussteht und dabei auf die Basis wenigstens einer Schaufel der anderen der beiden Mitgliedschaufelreihen ragt.

Es ist somit vorgesehen, dass ein Schaufelprofil fest auf einer Basis angeordnet ist. Dabei kann die Basis durch einen einzelnen Schaufelfuß, ein über mehrere Schaufeln einer Statorschaufelreihe gehendes Ringsegment oder einen über alle Schaufeln einer Statorschaufelreihe gehenden Vollring gebildet sein. Die Basen zweier benachbarter Mitgliedschaufelreihen grenzen über wenigstens einen Teil des Umfangs der Strömungsmaschine direkt aneinander an, wobei wenigstens ein Schaufelprofil einer der beiden Reihen über seine Basis hinaussteht und auf die Basis wenigstens eines Schaufelprofils der anderen der beiden Reihen ragt. Dabei kann zwischen dem hinausstehenden Teil des Schaufelprofils der einen Reihe und der Basis der anderen Reihe ein Spalt mit endlicher oder Null betragender Weite vorgesehen sein. In letzterem Fall verhält es sich also so, dass im über seine Basis hinausragenden Bereich eines Schaufelprofils ein radialer Spalt zwischen dem Schaufelprofil und der Basis wenigstens einer Schaufel der anderen Mitgliedschaufelreihe besteht.

Die erfindungsgemäße Lösung stellt eine baulich kompakte Lösung bereit, um die Schaufeln einer Schaufelreihengruppe zu fixieren. Dabei können insbesondere geringe Axialabstände der Schaufeln benachbarter Schaufelreihen einer Schaufelreihengruppe realisiert werden. Auch kann dabei vorgesehen werden, dass von der Vorderkante einer Schaufel einer hinteren Mitgliedsschaufelreihe zur Hinterkante einer Schaufel einer vorderen Mitgliedsschaufelreihe ein meridionaler Eingriff, d.h. eine Überlappung der Schaufeln in der Meridionalrichtung vorgesehen ist. Dies ist aber nicht notwendigerweise der Fall.

Ausgestaltungen der Erfindung sind in den Unteransprüchen angegeben. Weitere Ausgestaltungen können wie folgt vorgesehen sein:
Gemäß einer Ausgestaltung steht wenigstens ein Schaufelprofil einer Schaufel der vorderen Mitgliedschaufelreihe in Strömungsrichtung über seine Basis hinaus und ragt es auf die Basis wenigstens einer Schaufel der hinteren Mitgliedschaufelreihe. Alternativ kann vorgesehen sein, dass wenigstens ein Schaufelprofil einer Schaufel der hinteren Mitgliedschaufelreihe gegen die Strömungsrichtung über seine Basis hinaussteht und auf die Basis wenigstens einer Schaufel der vorderen Mitgliedschaufelreihe ragt.

Eine weitere Ausgestaltung der Erfindung sieht vor, dass die Basen der Mitgliedschaufelreihen in der durch die Meridionalkoordinate m und die Umfangskoordinate u gebildeten Ebene jeweils eine Ausdehnung besitzen, die größer ist als die Verlängerung des Schaufelprofils der Schaufeln. Gemäß dieser Ausgestaltung verhält es sich somit nicht so, dass die Basis im Wesentlichen lediglich durch eine Verlängerung des Schaufelprofils über die Hauptströmungspfadberandung hinaus gebildet ist.

Gemäß einer Ausgestaltung besitzt die Basis wenigstens einer Schaufel einer der Mitgliedschaufelreihen wenigstens an einer ihrer beiden seitlichen Kontaktkanten zu benachbarten Schaufeln derselben Schaufelreihe einen abgewinkelten und durch wenigstens zwei Geradenstücke gebildeten Verlauf. Dabei kann vorgesehen sein, dass die seitlichen Kontaktkanten jeweils durch zwei Geradenstücke, nämlich ein in Axialrichtung verlaufendes Geradenstück und ein schräg zur Axialrichtung verlaufendes Geradenstück, gebildet sind.

Eine weitere Ausgestaltung der Erfindung sieht vor, dass bei Betrachtung senkrecht zur gaspfadseitigen Oberfläche der Hauptströmungspfadberandung die Basis einer Schaufel der einen Reihe wenigstens teilweise in die Basis einer Schaufel der anderen Reihe eingebettet ist. Dazu kann vorgesehen sein, dass eine vordere Basiskante der vorderen Basis und wenigstens ein Abschnitt einer vorderen Basiskante der hinteren Basis oder eine hintere Basiskante der hinteren Basis und wenigstens ein Abschnitt der hinteren Basiskante der vorderen Basis einen gemeinsamen Linienzug bilden. Weiter kann hierzu vorgesehen sein, dass eine seitliche Kontaktkante einer Basis der einen Reihe an der seitlichen Kontaktkante der Basis einer benachbarten Schaufel der anderen Reihe anliegt.

In einer Ausführungsvariante ist die Basis einer Schaufel der einen Reihe gänzlich in die Basis einer Schaufel der anderen Reihe eingebettet ist. Auch kann vorgesehen sein, dass die Basis einer Schaufel der einen Reihe im Bereich schräg zur Axialrichtung verlaufender seitlicher Kontaktkanten der Basis einer Schaufel der anderen Reihe vorgesehen ist.

Bei einer erfindungsgemäßen Schaufelreihenbaugruppe kann vorgesehen sein, dass an beiden Mitgliedschaufelreihen an der durch ein Gehäuse gebildeten äußeren Hauptströmungspfadberandung eine festes Schaufelende der Schaufeln ausgebildet ist, während wenigstens an einer der beiden Mitgliedschaufelreihen an der durch eine Nabe gebildeten inneren Hauptströmungspfadberandung ein freies Schaufelende mit Laufspalt vorgesehen ist.

Alternativ kann bei einer erfindungsgemäßen Schaufelreihenbaugruppe vorgesehen sein, dass an beiden Mitgliedschaufelreihen an der durch ein Gehäuse gebildeten äußeren Hauptströmungspfadberandung eine festes Schaufelende der Schaufeln ausgebildet ist, wobei wenigstens an einer der beiden Mitgliedschaufelreihen an der durch eine Nabe gebildeten inneren Hauptströmungspfadberandung ebenfalls ein festes Schaufelende, beispielsweise in einer Anordnung mit einem Innendeckband, vorgesehen ist.

Nach einer weiteren Ausgestaltung der Erfindung ist wenigstens an einer der Hauptströmungspfadberandungen HB die Hinterkante einer Schaufel der vorderen Schaufelgruppe in der durch die Axialrichtung x und die Radialrichtung r gebildeten Meridionalebene stromabwärts der Vorderkante einer Schaufel der hinteren Schaufelgruppe angeordnet. Alternativ kann vorgesehen sein, dass wenigstens an einer der Hauptströmungspfadberandungen HB die Hinterkante einer Schaufel der vorderen Schaufelgruppe in der durch die Axialrichtung x und die Radialrichtung r gebildeten Meridionalebene in derselben Axialposition oder stromaufwärts der Vorderkante einer Schaufel der hinteren Schaufelgruppe angeordnet ist.

Gemäß einer Ausführungsvariante besitzt bei Betrachtung der gaspfadseitigen Oberfläche der betreffenden Hauptströmungspfadberandung die Basis der Schaufeln der vorderen Mitgliedschaufelreihe eine vordere Basiskante und eine hintere Basiskante und besitzt die Basis der Schaufeln der hinteren Mitgliedschaufelreihe eine vordere Basiskante und eine hintere Basiskante.

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Reihe oder aus mehreren benachbarten und eine Gruppe bildenden Reihen von Schaufeln, die mit der rotierenden Welle der Maschine verbunden sind und Energie mit dem Arbeitsmedium austauschen. Erfindungsgemäß günstig ist eine Anwendung auf Strömungsarbeitsmaschinen, bei denen der Rotor Energie an das Arbeitsmedium abgibt. Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit festem oder freiem Schaufelende mit Spalt ausgeführt sein können. Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so daß die Rotorschaufelreihen von Stufe zu Stufe die Drehrichtung wechseln. Hierbei existieren keine Statoren zwischen aufeinander folgenden Rotoren. Schließlich kann die Strömungsmaschine alternativ eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Erfindung wird nachfolgend unter Bezugnahme auf die Figuren der Zeichnung anhand mehrerer Ausführungsbeispiele näher erläutert. Es zeigen:
- Fig. 1:: eine Statorschaufelreihengruppe nach dem Stand der Technik,
- Fig. 2:: die Definition von Meridionalstromlinien,
- Fig. 3a:: eine erfindungsgemäße Statorbaugruppe,
- Fig. 3b:: eine erfindungsgemäße Anordnung zweier Mitgliedschaufelreihen (Umfangsbetrachtung im Schnitt A-A aus Fig.3a),
- Fig. 3c:: eine weitere erfindungsgemäße Statorbaugruppe,
- Fig. 3d:: eine erfindungsgemäße Anordnung zweier Mitgliedschaufelreihen (Umfangsbetrachtung im Schnitt A-A aus Fig.3c),
- Fig. 4a:: eine weitere erfindungsgemäße Statorbaugruppe,
- Fig. 4b:: eine erfindungsgemäße Anordnung zweier Mitgliedschaufelreihen (Umfangsbetrachtung im Schnitt A-A aus Fig.4a),
- Fig. 5a:: eine weitere erfindungsgemäße Statorbaugruppe,
- Fig. 5b:: eine erfindungsgemäße Anordnung zweier Mitgliedschaufelreihen (Umfangsbetrachtung im Schnitt A-A aus Fig.5a),
- Fig. 5c:: eine erfindungsgemäße Anordnung zweier Mitgliedschaufelreihen (Umfangsbetrachtung im Schnitt A-A aus Fig.5a),
- Fig. 5d:: eine weitere erfindungsgemäße Anordnung zweier Mitgliedschaufelreihen (Umfangsbetrachtung im Schnitt A-A aus Fig.5a),
- Fig. 6a:: eine weitere erfindungsgemäße Statorbaugruppe, und
- Fig. 6b:: eine erfindungsgemäße Anordnung zweier Mitgliedschaufelreihen (Umfangsbetrachtung im Schnitt A-A aus Fig.6a)

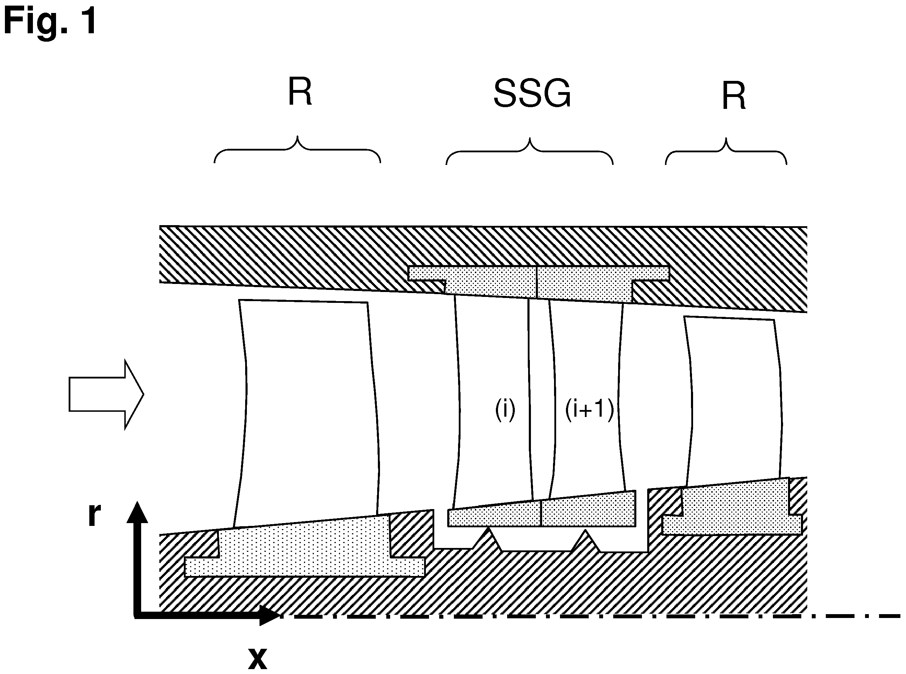

Die Fig. 1 zeigt in der durch die Axialrichtung x und die Radialrichtung r gebildeten Meridionalebene den Abschnitt einer Strömungsmaschine mit zwei Rotorschaufelreihen und einer dazwischen angeordneten Statorschaufelreihengruppe SSG, welche aus mindestens zwei gleichartigen und ihre relative Anordnung zueinander (sowohl in Umfangsrichtung als auch in Meridionalrichtung) nicht ändernden direkt benachbarten Mitgliedsschaufelreihen besteht, wobei das erste Mitglied der Gruppe mit (i) und das zweite Mitglied der Gruppe mit (i+1) gekennzeichnet ist.

Es wird darauf hingewiesen, dass zu Zwecken einer übersichtlichen Darstellung in der Fig. 1 und auch den anderen Figuren zwischen der Bezeichnung der Mitgliedsschaufelreihen (i) und (i+1) und der Bezeichnung der einzelnen Mitglieder bzw. Schaufeln der Mitgliedsschaufelreihen nicht unterschieden wird, d.h. die Mitglieder bzw. Schaufeln der Schaufelreihen sind ebenfalls mit (i) und (i+1) bezeichnet.

Das Schaufelprofil stellt den aerodynamisch relevanten Bestandteil der Schaufel dar, der von Gas umströmt wird (anders als z.B. ein Schaufelfuß). Auch zwischen der Bezeichnung des Schaufelprofils und der Bezeichnung der jeweiligen Schaufel wird in den Figuren zu Zwecken einer übersichtlichen Darstellung nicht unterschieden.

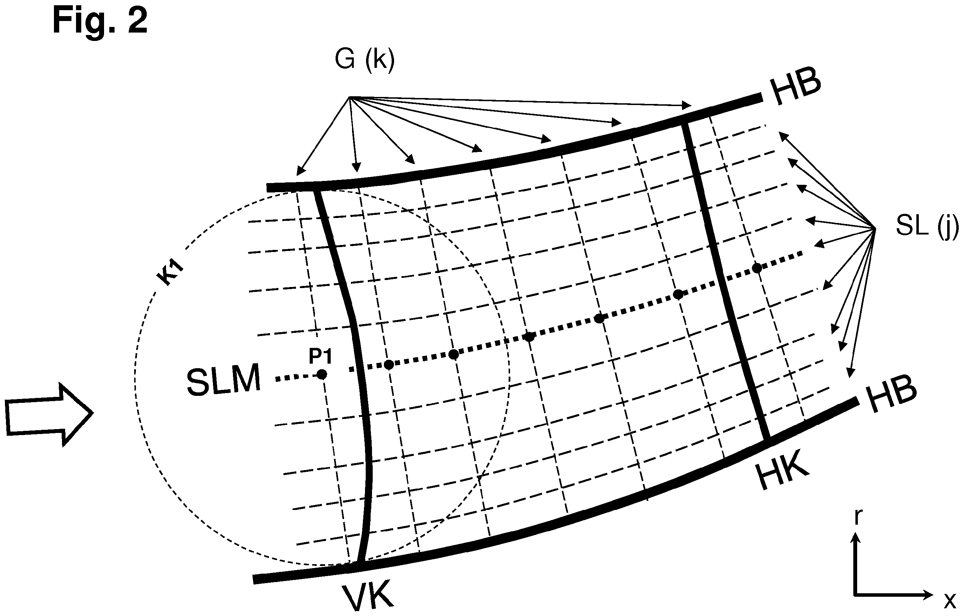

Die Fig. 2 zeigt zur Definition von Meridionalstromlinien einen Hauptströmungspfad einer Strömungsmaschine mit Durchströmung von links nach rechts (angezeigt durch den dicken Pfeil), in der durch die Axialkoordinate x und die Radialkoordinate r gebildeten Meridionalebene, wobei der Hauptströmungspfad durch die radial inneren Hauptströmungspfadberandung HB und die radial äußere Hauptströmungspfadberandung HB begrenzt wird. Mittig zwischen der radial inneren Hauptströmungspfadberandung HB und der radial äußeren Hauptströmungspfadberandung HB ist die mittlere Meridionalstromlinie SLM gegeben. Ihr Verlauf entspricht der Verbindung der Mittelpunkte dem Hauptströmungspfad einbeschriebener Kreise, wie im Bild für den ersten markierten Punkt P1 auf der mittleren Meridionalstromlinie SLM und den zugehörigen Kreis K1 beispielhaft verdeutlicht wird. VK und HK bezeichnen die Vorderkante und die Hinterkante einer im Hauptströmungspfad angeordneten Schaufel.

Eine Schar von Geraden G(k) ist innerhalb des Hauptströmungspfades gegeben, deren Mitglieder jeweils senkrecht auf der mittleren Meridionalstromlinie SLM stehen und an den Hauptströmungspfadberandungen HB enden. Weitere Meridionalstromlinien SL(j) sind durch die Verbindung von Punkten bei jeweils gleicher prozentualer Unterteilung der Geraden G(k) zwischen den Hauptströmungspfadberandungen HB definiert. Die Rotation einer Meridionalstromlinie um die Maschinenachse ergibt eine Meridionalstromfläche SF(j). Der Schnitt einer Meridionalstromfläche mit einer Schaufel der Strömungsmaschine ergibt einen Meridionalstromlinienschnitt SLS(j).

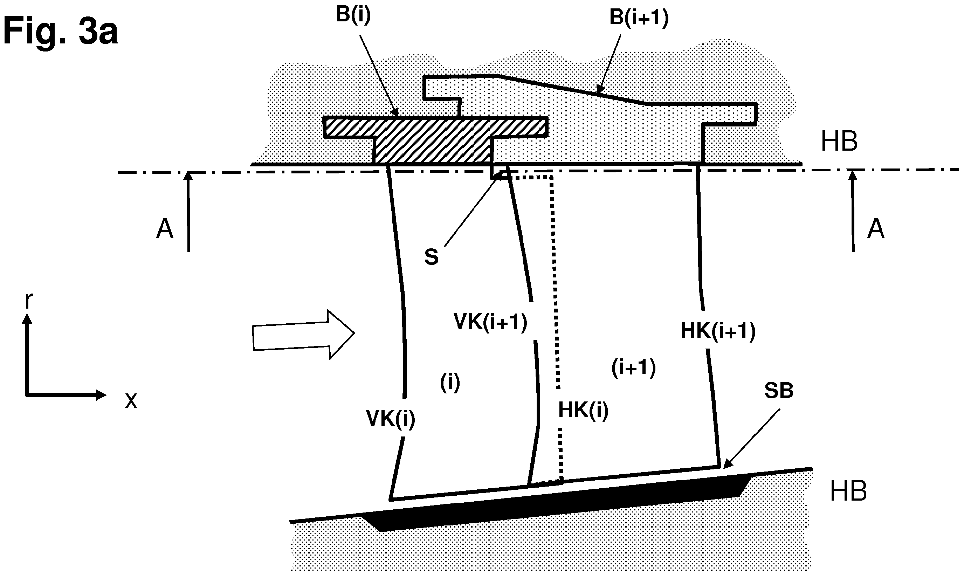

Die Fig. 3a zeigt in der durch die Axialrichtung x und die Radialrichtung r gebildeten Meridionalebene eine erfindungsgemäße Statorschaufelreihengruppe SSG bestehend aus zwei direkt benachbarten feststehenden Statorschaufelreihen (i) und (i+1). Ebenfalls erfindungsgemäß ist eine Konfiguration aus mehr als zwei Mitgliedschaufelreihen, beispielsweise drei Mitgliedschaufelreihen. Die zwei dargestellten Mitgliedschaufelreihen können erfindungsgemäß also gleichermaßen zwei Mitgliedschaufelreihen aus einem Verband von drei oder mehr Mitgliedschaufelreihen bilden.

Die beiden dargestellten Schaufelreihenmitglieder (i) und (i+1) besitzen eine feste Verbindung zwischen dem radial äußeren Schaufelende und der radial äußeren Hauptströmungspfadberandung HB (festes Schaufelende) am Gehäuse sowie eine Befestigung der Schaufeln im Gehäuse, und sie besitzen einen Radialspalt RS zwischen dem radial inneren Schaufelende und der radial inneren Hauptströmungspfadberandung HB (freies Schaufelende) an der Nabe.

Die Vorder- und Hinterkanten der Schaufeln der Reihe (i) sind mit VK(i) und HK(i) gekennzeichnet, die Vorder- und Hinterkanten der Schaufeln der Reihe (i+1) sind mit VK(i+1) und HK(i+1) gekennzeichnet.

Am festen Schaufelende der Reihen (i) und (i+1) ist das Schaufelprofil jeweils auf einer Basis B(i), B(i+1) befestigt. Es kann vorteilhaft sein, wenn die Basis B(i), B(i+1) wenigstens einer der beiden Reihen (i) und (i+1) durch einen einzelnen Schaufelfuß gebildet wird. Dabei kann vorgesehen sein, dass ein Schaufelfuß der Reihe (i) im Wesentlichen lediglich durch eine Verlängerung wenigstens eines Teiles des Schaufelprofils über die Hauptströmungspfadberandung hinaus gebildet wird, wobei die Basen der Reihen (i) und (i+1) ggf. durch eine presssitzartige Fügung miteinander verbunden sind.

Alternativ kann vorgesehen sein, dass die Basis wenigstens einer der beiden Reihen (i) und (i+1) durch ein über mehrere Schaufeln einer Statorschaufelreihe gehendes Ringsegment gebildet wird.

Alternativ kann des Weiteren vorgesehen sein, dass die Basis wenigstens einer der beiden Reihen (i) und (i+1) durch einen über alle Schaufeln einer Statorschaufelreihe gehenden Vollring gebildet ist.

Für eine detaillierte Betrachtung der erfindungsgemäßen Geometrie zeigt die Fig.3a einen Schnitt A-A, mit dessen Hilfe im Weiteren die Schaufelanordnung genauer beschrieben wird. Der Schnitt A-A verläuft entlang einer Meridionalstromlinie in einem infinitesimal kleinen Abstand von der Hauptströmungspfadberandung HB, so dass sie einen entlang der Hauptströmungspfadberandung HB gegebenen Spalt über seine ganze Erstreckung durchdringt.

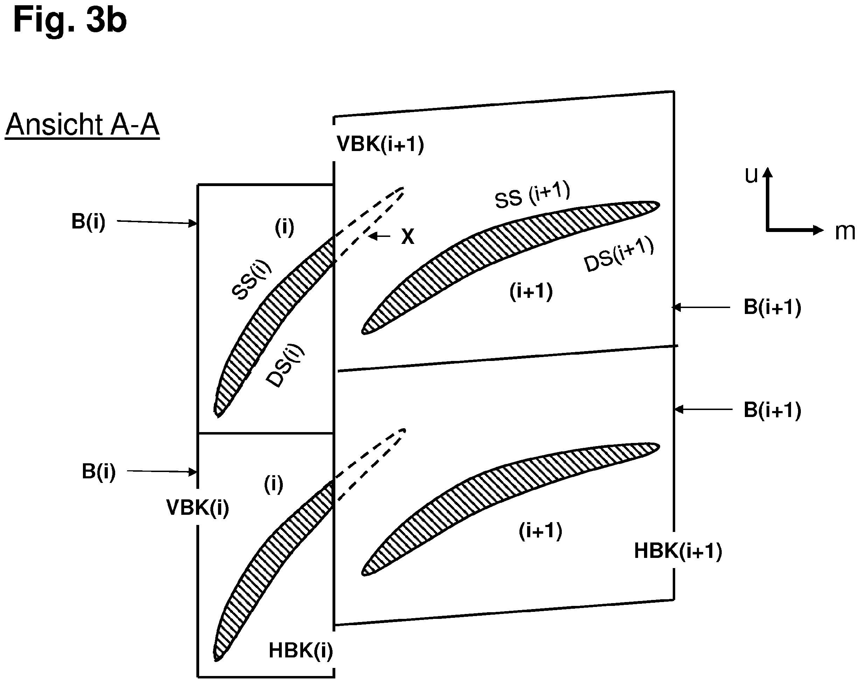

Die Fig. 3b zeigt die erfindungsgemäße Statorschaufelreihenanordnung im Schnitt A-A aus Fig. 3a, folglich in einer durch die Meridionalkoordinate m und die Umfangskoordinate u gebildeten Ebene. Die jeweilige Basis B(i), B(i+1) der Schaufeln wird in der hier gewählten Darstellung durch einzelne Schaufelfüße gebildet. Die Basis B(i) der Schaufeln der Reihe (i) besitzt eine vordere Basiskante VBK(i) und eine hintere Basiskante HBK(i). Die Basis B(i+1) der Schaufeln der Reihe (i+1) besitzt eine vordere Basiskante VBK(i+1) und eine hintere Basiskante HBK(i+1). Die im Wesentlichen konvexen Saugseiten der Schaufeln der Reihen (i) und (i+1) sind mit SS und die im Wesentlichen konkaven Druckseiten mit DS gekennzeichnet.

Erfindungsgemäß grenzen die Basen B(i), B(i+1) zweier benachbarter Mitgliedschaufelreihen (i) und (i+1) direkt aneinander, sodass die hintere Basiskante HBK(i) an der vorderen Basiskante VBK(i+1) anliegt, in dem hier dargestellten erfindungsgemäßen Fall entlang des gesamten Umfangs der Strömungsmaschine bei konstanter axialer Position.

Dabei kann es günstig sein, wenn die Basis B(i), B(i+1) wenigstens einer der beiden Mitgliedschaufelreihen (i) und (i+1) eine parallelogrammartige oder gar rechteckige Form hat. Konstruktiv besonders vorteilhaft ist es, wenn die Basis B(i), B(i+1) beider Mitgliedschaufelreihen (i) und (i+1) eine rechteckige Form hat.

Hier nicht dargestellt, aber ebenfalls erfindungsgemäß sind Anordnungen, bei denen die hintere Basiskante HBK(i) und die vordere Basiskante VBK(i+1) entlang wenigstens eines Teils des Umfangs bei veränderlicher axialer Position verlaufen. Günstig dabei ist es, wenn wenigstens eine der Basiskanten VBK(i) und HBK(i+1) in Umfangsrichtung bei konstanter Axialposition verlaufen, sodass die Basen der Mitgliedschaufelreihen (i) und (i+1) in Umfangsrichtung eine definierte unveränderliche Lage zueinander einnehmen. Dabei kann es günstig sein, den Verlauf wenigstens einer der Basiskanten HBK(i) und VBK(i+1) polygonzugartig oder gegebenenfalls geradlinig auszubilden.

In der Anordnung der Figuren 3a, 3b ist vorgesehen, dass wenigstens ein Schaufelprofil der vorderen Reihe (i) in Strömungsrichtung über seine Basis hinaussteht und in Strömungsrichtung auf die Basis wenigstens eines Schaufelprofils der hinteren Reihe (i+1) ragt. Folglich ist das Schaufelprofil der Reihe (i) im Bereich seiner Hinterkante HK(i) kragend angeordnet, wobei im über seine Basis B(i) hinausragenden Bereich X ein Spalt zwischen dem Schaufelprofil und der Basis B(i+1) der Schaufeln der hinteren Reihe (i+1) besteht. Der Spalt ist in der Fig. 3a mit S bezeichnet.

Im hier dargestellten Fall ist die Vorderkante VK(i+1) einer Schaufel der Reihe (i+1) nah an der vorderen Basiskante VBK(i+1) angeordnet, so dass wenigstens im Bereich der äußeren Hauptströmungspfadberandung HB die Hinterkante HK(i) stromab der Vorderkante VK(i+1) verläuft, d.h. zumindest in einem Bereich angrenzend an die Hauptströmungspfadberandung HB ein meridionaler Eingriff jeweils zweier benachbarter Schaufeln (i), (i+1) vorgesehen ist.

Es kann wie bereits erwähnt vorgesehen sein, dass zwischen dem hinausstehenden Teil X des Schaufelprofils der Reihe (i) und der Basis B(i+1) der Reihe (i+1) ein Spalt S vorgesehen ist. Dabei kann für ausgewählte Anordnungen vorgesehen sein, dass der hinausstehende Teil X des Schaufelprofils der Reihe (i) eng an der Basis B(i+1) der Reihe (i+1) anliegt und so der Spalt S eine Weite von gleich oder nahe Null besitzt.

Es kann ebenfalls vorgesehen sein, dass die Basis B(i+1) einer der Schaufeln der Reihe (i+1) wenigstens an einer der beiden seitlichen Kontaktkanten zu benachbarten Schaufeln der Reihe (i+1) einen abgewinkelten, durch wenigstens zwei Geradenstücke gebildeten Verlauf besitzt. Dabei kann es besonders günstig sein, wenn wenigstens eine der seitlichen Kontaktkanten durch zwei Geradenstücke, ein in Axialrichtung verlaufendes Geradenstück und ein schräg zur Axialrichtung verlaufendes Geradenstück, gebildet wird.

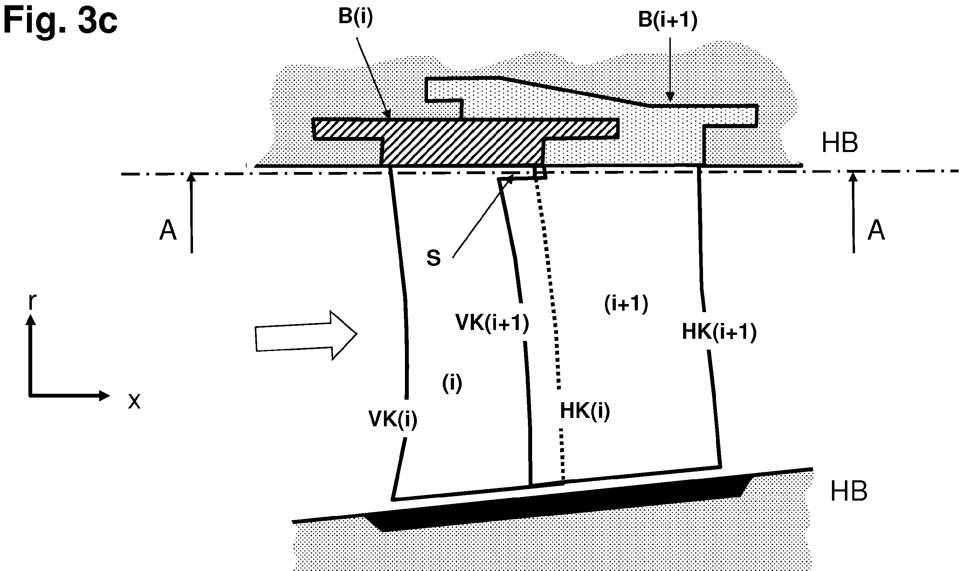

Die Fig. 3c zeigt, ähnlich wie die Fig. 3a, in der durch die Axialrichtung x und die Radialrichtung r gebildeten Meridionalebene eine erfindungsgemäße Statorschaufelreihengruppe SSG bestehend aus zwei direkt benachbarten feststehenden Statorschaufelreihen (i) und (i+1).

Bei der hier dargestellten Anordnung steht wenigstens ein Schaufelprofil der hinteren Reihe (i+1) gegen die Strömungsrichtung über seine Basis hinaus B(i+1) und ragt entgegen der Strömungsrichtung auf die Basis B(i) wenigstens eines Schaufelprofils der vorderen Reihe (i). Folglich ist das Schaufelprofil der Reihe (i+1) im Bereich seiner Vorderkante VK(i+1) kragend angeordnet. Im über seine Basis B(i+1) hinausragenden Bereich besteht ein Spalt S zwischen dem Schaufelprofil und der Basis B(i) der Schaufeln der vorderen Reihe (i+1).

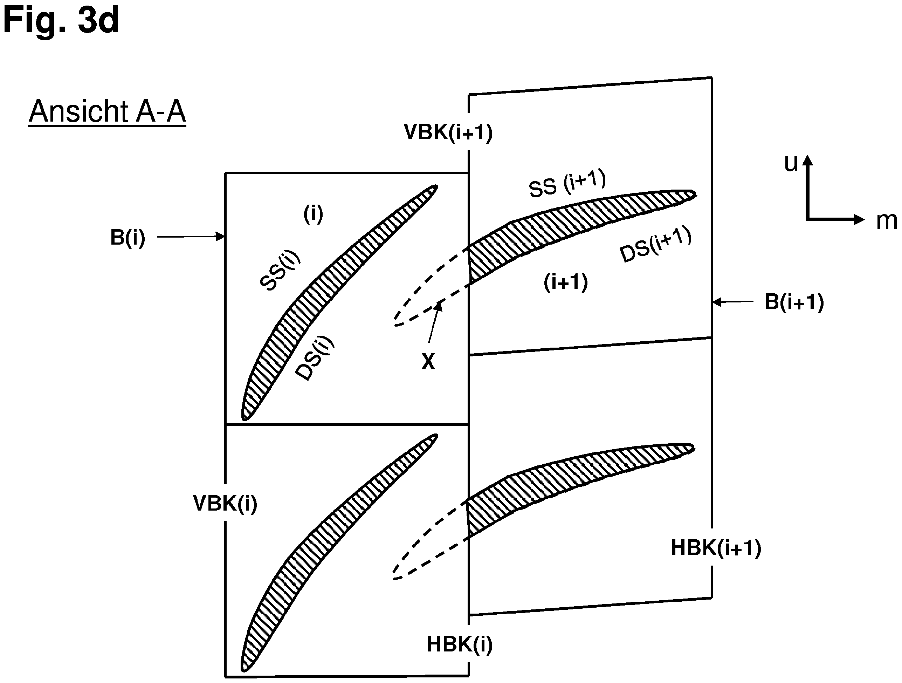

Die Fig. 3d zeigt die erfindungsgemäße Statorschaufelreihenanordnung im Schnitt A-A aus Fig. 3c, folglich in einer durch die Meridionalkoordinate m und die Umfangskoordinate u gebildeten Ebene. Die Basis B(i), B(i+1) der Schaufeln i, i+1 wird auch hier durch einzelne Schaufelfüße gebildet.

Im hier dargestellten Fall ist die Hinterkante HK(i) einer Schaufel der Reihe (i) nah an der hinteren Basiskante HBK(i) vorgesehen, sodass wenigstens im Bereich der äußeren Hauptströmungspfadberandung HB die Hinterkante HK(i) stromab der Vorderkante VK(i+1) verläuft, d.h. zumindest in einem Bereich angrenzend an die Hauptströmungspfadberandung HB ein meridionaler Eingriff jeweils zweier benachbarter Schaufeln (i), (i+1) vorgesehen ist.

Es kann wie erwähnt vorgesehen sein, dass zwischen dem hinausstehenden Teil X des Schaufelprofils der Reihe (i+1) und der Basis B(i) der vorderen Reihe (i) ein Spalt vorgesehen ist. Dabei kann für ausgewählte Anordnungen vorgesehen sein, wenn der hinausstehende Teil X des Schaufelprofils der Reihe (i+1) eng an der Basis B(i) der Reihe (i) anliegt und so der Spalt eine Weite von gleich oder nahe Null besitzt.

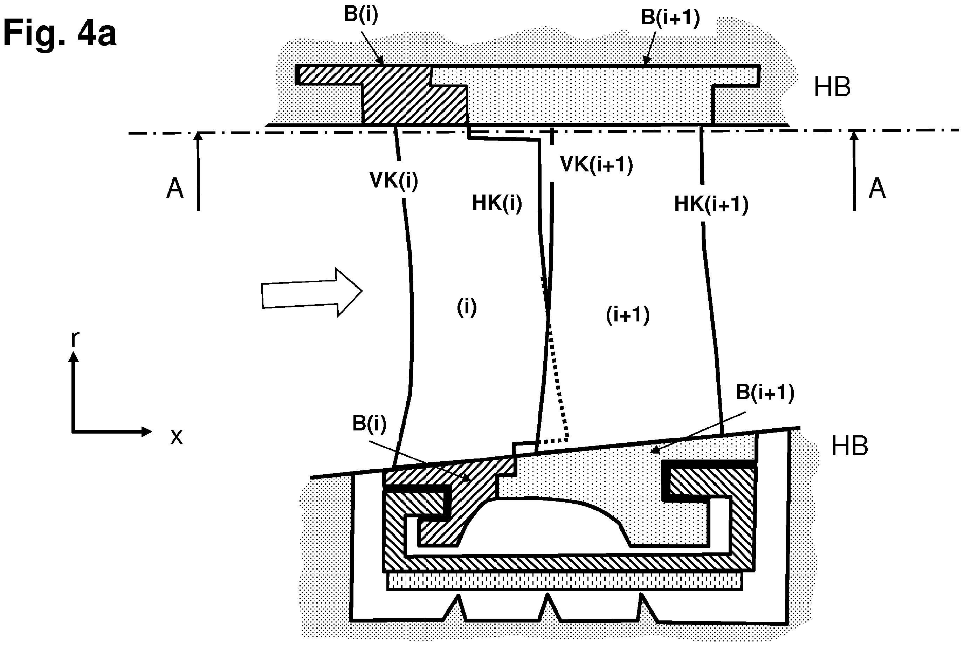

Die Fig. 4a zeigt in der durch die Axialrichtung x und die Radialrichtung r gebildeten Meridionalebene eine erfindungsgemäße Statorschaufelreihengruppe SSG bestehend aus zwei direkt benachbarten feststehenden Statorschaufelreihen (i) und (i+1). Die beiden dargestellten Schaufelreihenmitglieder (i) und (i+1) besitzen eine feste Verbindung zwischen dem radial äußeren Schaufelende und der äußeren Hauptströmungspfadberandung HB am Gehäuse sowie eine Befestigung der Schaufeln im Gehäuse. Die Schaufelreihenmitglieder besitzen zudem eine feste Verbindung zwischen dem inneren Schaufelende und der inneren Hauptströmungspfadberandung, gegeben durch eine Deckbandkonstruktion, die in eine Kavität in der Nabe eingebettet ist, sowie eine Befestigung der Schaufeln in der Deckbandkonstruktion.

An jeweils beiden Schaufelenden der Schaufeln der Reihen (i) und (i+1) ist das Schaufelprofil auf einer Basis B(i), B(i+1) befestigt, wobei die Basis hier durch einzelne Schaufelfüße gebildet wird. An beiden Schaufelenden gilt dabei, dass ein Schaufelprofil der vorderen Reihe (i) über seine Basis B(i) hinaussteht und in Strömungsrichtung auf die Basis B(i+1) wenigstens eines Schaufelprofils der hinteren Reihe (i+1) ragt.

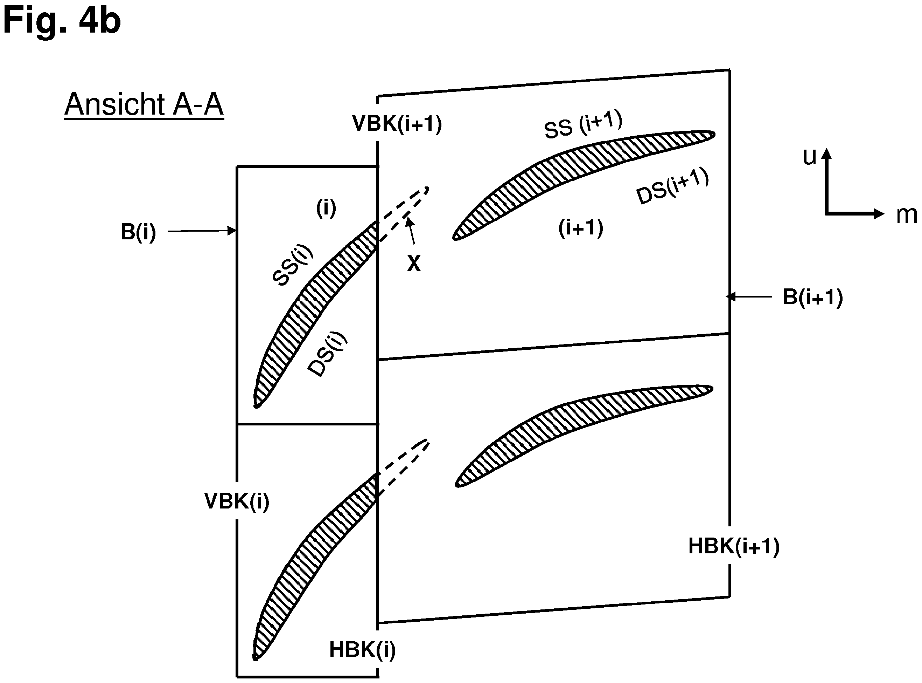

Die Fig. 4b zeigt die erfindungsgemäße Statorschaufelreihenanordnung in dem infinitesimal klein von der Hauptströmungspfadberandung beabstandeten Schnitt A-A aus Fig. 4a, folglich in einer durch die Meridionalkoordinate m und die Umfangskoordinate u gebildeten Ebene.

Im hier dargestellten Fall ist die Vorderkante VK(i+1) einer Schaufel der Reihe (i) entfernt von der vorderen Basiskante VBK(i+1) vorgesehen, sodass wenigstens im Bereich der äußeren Hauptströmungspfadberandung die Hinterkante HK(i) stromauf der Vorderkante VK(i+1) vorgesehen ist.

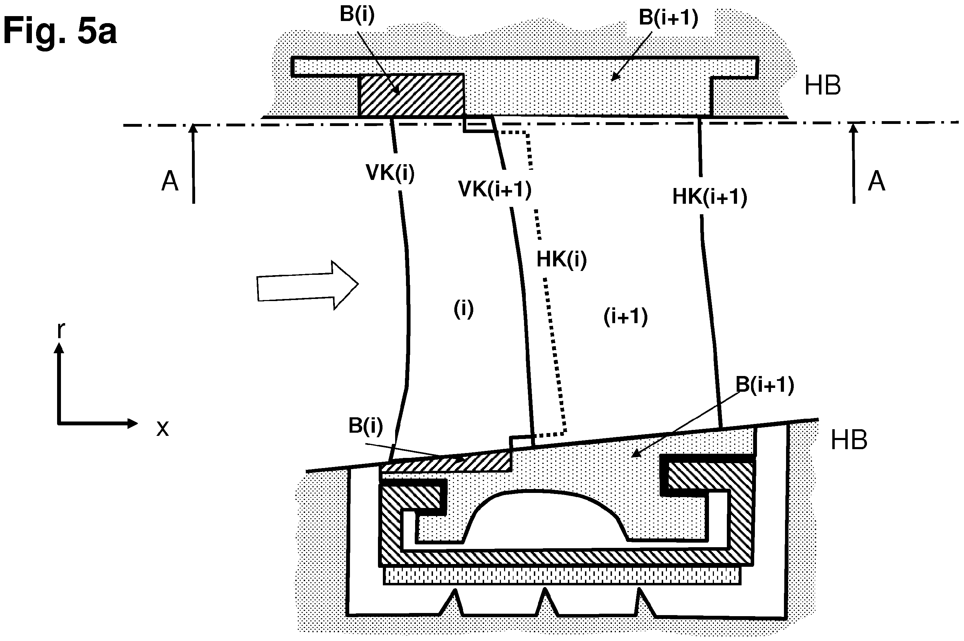

Die Fig. 5a zeigt ähnlich wie die Fig. 4a eine erfindungsgemäße Statorschaufelreihengruppe SSG in der durch die Axialrichtung x und die Radialrichtung r gebildeten Meridionalebene. Erfindungsgemäß ist bei diesem Ausführungsbeispiel bei Blick auf die gaspfadseitige Oberfläche der Hauptströmungspfadberandung die Basis B(i) der Schaufeln der Reihe (i) wenigstens teilweise von der Basis B(i+1) der Schaufeln der Reihe (i+1) umgeben. Es kann dabei vorgesehen sein, wenn die Basis B(i) der Schaufeln der Reihe (i) bezüglich der Axialrichtung gänzlich in die Basis B(i+1) der Schaufeln der Reihe (i+1) eingelassen ist.

Die Schaufelreihenmitglieder besitzen ebenso wie bei der Fig. 4a auch eine feste Verbindung zwischen dem inneren Schaufelende und der inneren Hauptströmungspfadberandung, gegeben durch eine Deckbandkonstruktion, die in eine Kavität in der Nabe eingebettet ist, sowie eine Befestigung der Schaufeln in der Deckbandkonstruktion.

An jeweils beiden Schaufelenden der Schaufeln der Reihen (i) und (i+1) ist das Schaufelprofil auf einer Basis B(i), B(i+1) befestigt, wobei die Basis hier durch einzelne Schaufelfüße gebildet wird. An beiden Schaufelenden gilt dabei, dass ein Schaufelprofil der vorderen Reihe (i) über seine Basis B(i) hinaussteht und in Strömungsrichtung auf die Basis B(i+1) wenigstens eines Schaufelprofils der hinteren Reihe (i+1) ragt.

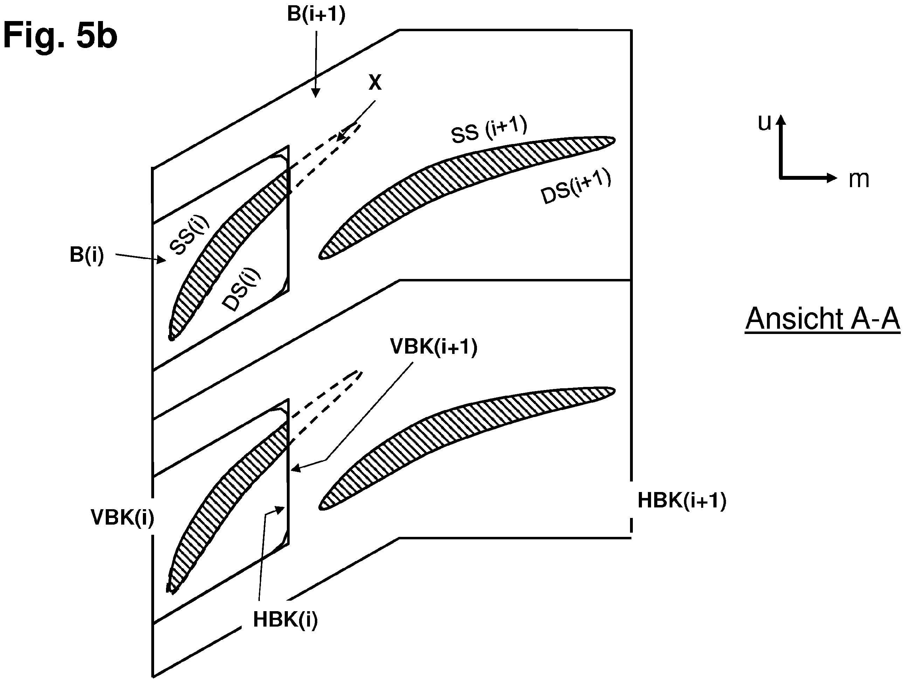

Die Fig. 5b zeigt die erfindungsgemäße Statorschaufelreihenanordnung in dem infinitesimal klein von der Hauptströmungspfadberandung beabstandeten Schnitt A-A aus der Fig. 5a, folglich in einer durch die Meridionalkoordinate m und die Umfangskoordinate u gebildeten Ebene. Es ist vorgesehen, dass wenigstens im Bereich der äußeren Hauptströmungspfadberandung HB die Hinterkante HK(i) stromab der Vorderkante VK(i+1) angeordnet ist.

Die Basis B(i) der Schaufeln der Reihe (i) ist hier dreiseitig von der Basis B(i+1) der Schaufeln der Reihe (i+1) umgeben. Die hintere Basiskante HBK(i) und die vorderen Basiskante VBK(i+1) liegen entlang eines Teils des Umfangs aneinander.

Die Basis B(i+1) der Reihe (i+1) kann dabei eine rechteckige, eine parallelogrammartige, eine sechseckige und abgewinkelte Form besitzen, besonders vorteilhaft kann es jedoch sein, wenn, wie hier dargestellt, beide seitlichen Kontaktkanten der Basis der Reihe (i+1) durch je zwei Geradenstücke, ein in Axialrichtung verlaufendes Geradenstück und ein schräg zur Axialrichtung verlaufendes Geradenstück, gebildet werden.

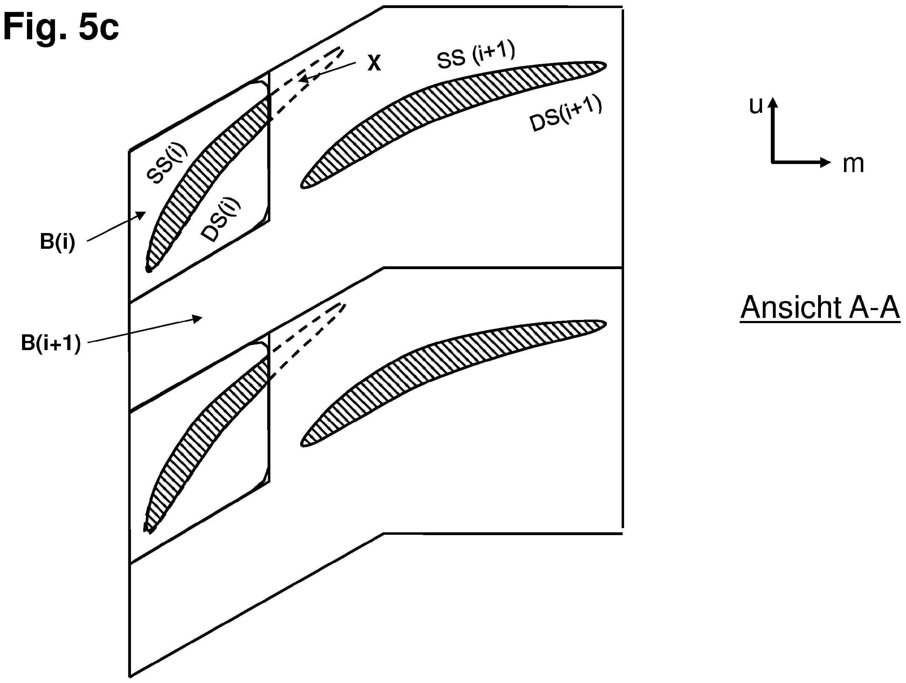

Die Fig. 5c zeigt eine ähnliche Anordnung im Schnitt A-A wie die Fig. 5b. Die Basis B(i) der Reihe (i) ist in die Basis B(i+1) der Reihe (i+1) eingelassen, derart, dass eine der seitlichen Kontaktkanten der Basis B(i) der Reihe (i) an eine der seitlichen Kontaktkanten der Basis B(I+1) der Reihe (i+1) grenzt. Es ist kann besonders günstig sein, wenn dies im Bereich eines schräg zur Axialrichtung verlaufendes Abschnitts der seitlichen Kontaktkante der Basis der Reihe (i+1) vorgesehen ist.

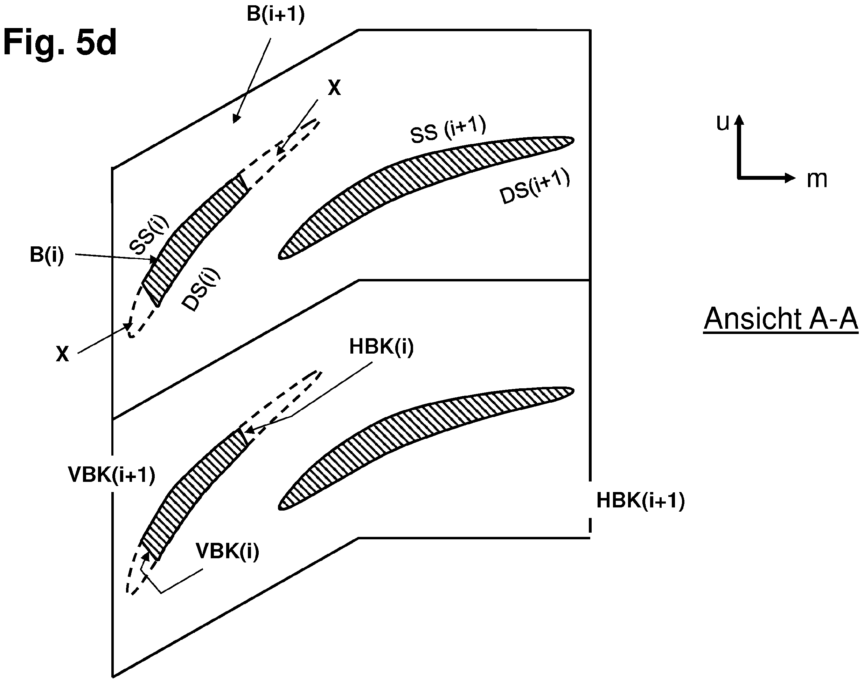

Die Fig. 5d zeigt eine erfindungsgemäße Abwandlung der als Schaufelfuß ausgebildeten Basis B(i) der Reihe (i). Hier ist der Schaufelfuß B(i) der Reihe (i) im Wesentlichen lediglich durch eine Verlängerung wenigstens eines Teiles des Schaufelprofils über die Hauptströmungspfadberandung hinaus gebildet, wobei es günstig sein kann, die Basen B(i) und B(i+1) der Reihen (i) und (i+1) durch eine presssitzartige Fügung miteinander zu verbinden. Bei dieser Ausgestaltung ist also eine Verlängerung des Schaufelprofils, die in diesem Fall den Schaufelfuß B(i) bildet, in den hinteren Schaufelfuß B(i+1) eingelassen.

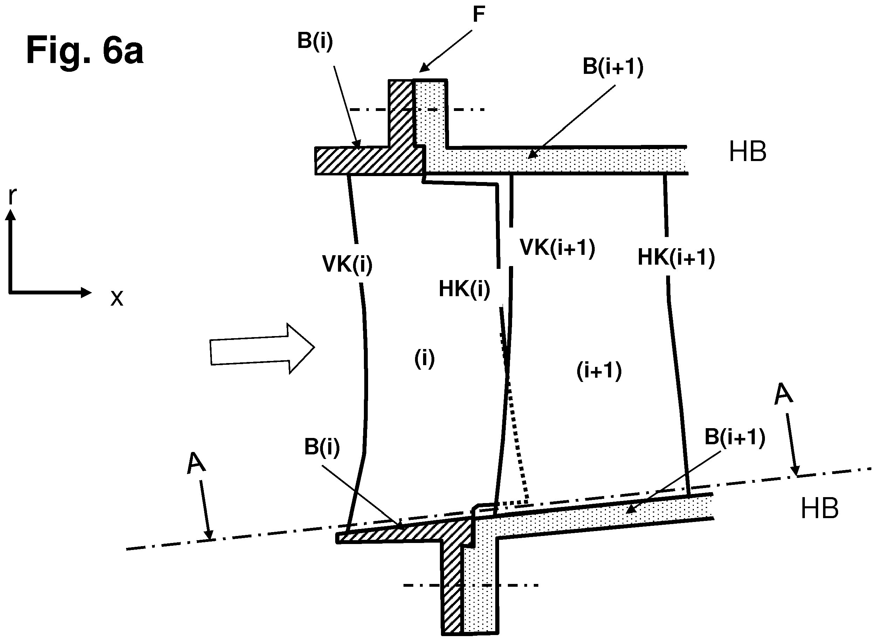

Die Fig. 6a zeigt ähnlich wie die Figuren 3a, 4a und 5a eine erfindungsgemäße Statorschaufelreihengruppe SSG in der durch die Axialrichtung x und die Radialrichtung r gebildeten Meridionalebene. Erfindungsgemäß ist an wenigstens einem festen Schaufelende wenigstens einer der Reihen (i) und (i+1) die Basis B(i) und B(i+1) durch ein über mehrere Schaufeln einer Statorschaufelreihe gehendes Ringsegment oder durch einen über alle Schaufeln einer Statorschaufelreihe gehenden Vollring gebildet. Dabei kann vorgesehen sein, dass der Teil- oder Vollring strukturell tragender Bestandteil des Gehäuses bzw. der Nabe ist. Die beiden Basen B(i) und B(i+1) sind dabei z.B. über eine Flanschverbindung F miteinander verbunden.

Auch bei der Ausgestaltung der Fig. 6a gilt, dass an mindestens einem der Schaufelenden ein Schaufelprofil der vorderen Reihe (i) über seine Basis B(i) hinaussteht und in Strömungsrichtung auf die Basis B(i+1) wenigstens eines Schaufelprofils der hinteren Reihe (i+1) ragt. Ebenso kann alternativ vorgesehen sein, dass an mindestens einem der Schaufelenden ein Schaufelprofil der hinteren Reihe (i+1) über seine Basis B(i+1) hinaussteht und entgegen der Strömungsrichtung auf die Basis B(i) wenigstens eines Schaufelprofils der vorderen Reihe (i) ragt.

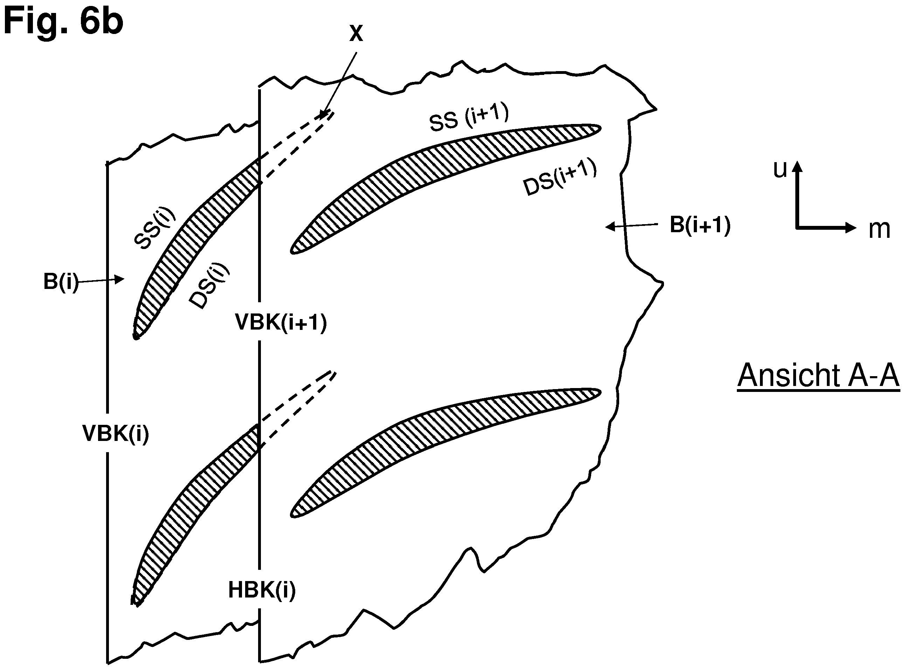

Die Fig. 6b zeigt die erfindungsgemäße Statorschaufelreihenanordnung in dem infinitesimal klein von der Hauptströmungspfadberandung beabstandeten Schnitt A-A aus Fig. 6a, folglich in einer durch die Meridionalkoordinate m und die Umfangskoodinate u gebildeten Ebene.

Die hintere Basiskante HBK(i) der Basis B(i) und die vorderen Basiskante VBK(i+1) der Basis B(i+1) liegen an dem betrachteten festen Schaufelende der Reihen (i) und (i+1) entlang des gesamten Umfangs aneinander. Dabei kann es vorteilhaft sein, wenn die hintere Basiskante HBK(i) und die vorderen Basiskante VBK(i+1) bezüglich ihrer Axialposition in Umfangsrichtung variieren.

Die vorliegende Erfindung beschränkt sich in ihrer Ausgestaltung nicht auf die dargestellten Ausführungsbeispiele. So können die Prinzipien der vorliegenden Erfindung beispielsweise in entsprechender Weise auf Rotor-Schaufelreihen und die Fixierung von Schaufelenden von Rotorschaufeln angewandt werden.

## Patentansprüche

1. Schaufelreihengruppe anordbar in einem Hauptströmungspfad einer Strömungsmaschine und bestehend aus N benachbarten und sowohl in Meridionalrichtung (m) als auch in Umfangsrichtung (u) relativ zueinander fest angeordneten Mitgliedsschaufelreihen, wobei
- die Anzahl N der Mitgliedsschaufelreihen größer gleich 2 ist und (i) den Laufindex mit Werten zwischen 1 und N kennzeichnet,
- in der durch die Axialrichtung (x) und die Radialrichtung (r) gebildeten Meridionalebene eine vordere Mitgliedsschaufelreihe mit vorderen Schaufeln (i) mit Vorderkante VK(i) und Hinterkante HK(i) sowie eine hintere Mitgliedsschaufelreihe mit hinteren Schaufeln (i+1) mit Vorderkante VK(i+1) und Hinterkante HK(i+1) gegeben sind,
- die Schaufelreihengruppe zwei Hauptströmungspfadberandungen (HB) aufweist und
- das Schaufelprofil der Schaufeln (i, i+1) der Mitgliedsschaufelreihen an wenigstens einer der beiden Hauptströmungspfadberandungen (HB) fest mit einer Basis (B(i), B(i+1)) verbunden ist, wobei wenigstens ein Schaufelprofil einer Schaufel (i, i+1) einer der beiden Mitgliedschaufelreihen zumindest angrenzend an die Hauptströmungspfadberandung (HB) über seine Basis (B(i), B(i+1)) hinaussteht und dabei auf die Basis (B(i), B(i+1)) wenigstens einer Schaufel (i, i+1) der anderen der beiden Mitgliedschaufelreihen ragt
**dadurch gekennzeichnet, dass**
(a) die Basis (B(i), B(i+1)) wenigstens einer Schaufel (i, i+1) einer der Mitgliedschaufelreihen durch einen Schaufelfuß gegeben ist, der im Wesentlichen durch eine Verlängerung wenigstens eines Teiles des Schaufelprofils über die Hauptströmungspfadberandung (HB) hinaus gebildet wird, wobei die Basen (B(i), B(i+1)) der Schaufeln (i, i+1) einer vorderen und einer hinteren Mitgliedschaufelreihe miteinander verbunden sind,
und/oder
(b) die Basen (B(i), B(i+1)) zweier benachbarter Mitgliedschaufelreihen entlang wenigstens eines Teils des Umfangs der Strömungsmaschine aneinander anliegen.

2. Schaufelreihenbaugruppe nach Anspruch 1, **dadurch gekennzeichnet, dass** die Basis (B(i), B(i+1)) wenigstens einer Schaufel (i, i+1) einer der Mitgliedschaufelreihen durch einen Schaufelfuß gegeben ist, der im Wesentlichen durch eine Verlängerung wenigstens eines Teiles des Schaufelprofils über die Hauptströmungspfadberandung (HB) hinaus gebildet wird, wobei die Basen (B(i), B(i+1)) der Schaufeln (i, i+1) einer vorderen und einer hinteren Mitgliedschaufelreihe durch eine presssitzartige Fügung der einen Basis in der anderen Basis miteinander verbunden sind.

3. Schaufelreihenbaugruppe nach Anspruch 1, **dadurch gekennzeichnet, dass** die Basen (B(i), B(i+1)) der Mitgliedschaufelreihen in der durch die Meridionalkoordinate (m) und die Umfangskoordinate (u) gebildeten Ebene jeweils eine Ausdehnung besitzen, die größer ist als die Verlängerung des Schaufelprofils der Schaufeln (i, i+1).

4. Schaufelreihenbaugruppe nach einem der vorangehenden Ansprüche, **dadurch gekennzeichnet, dass** eine vordere Basiskante (VBK(i+1)) der hinteren Basis (B(i+1)) entlang wenigstens eines Teils des Umfangs der Strömungsmaschine axial stromaufwärts einer hinteren Basiskante HBK(i) der vorderen Basis (B(i)) vorgesehen ist.

5. Schaufelreihenbaugruppe nach einem der vorangehenden Ansprüche, **dadurch gekennzeichnet, dass** zwischen dem hinausstehenden Teil (X) des Schaufelprofils der einen Mitgliedschaufelreihe und der Basis (B(i), B(i+1)) der anderen Mitgliedschaufelreihe ein Spalt (S) vorgesehen ist.

6. Schaufelreihenbaugruppe nach einem der Ansprüche 1 bis 4, **dadurch gekennzeichnet, dass** der hinausstehende Teil (X) des Schaufelprofils der einen Mitgliedschaufelreihe mit der Basis (B(i), B(i+1)) der anderen Mitgliedschaufelreihe in Kontakt steht und dementsprechend kein Spalt zwischen dem hinausstehenden Teil (X) und dieser Basis vorgesehen ist.

7. Schaufelreihenbaugruppe nach einem der vorangehenden Ansprüche, **dadurch gekennzeichnet, dass** eine hintere Basiskante HBK(i) der vorderen Basis (B(i)) und eine vordere Basiskante VBK(i+1) der hinteren Basis (B(i+1)) entlang wenigstens eines Teils des Umfangs bei konstanter axialer Position verlaufen.

8. Schaufelreihenbaugruppe nach Anspruch 7, **dadurch gekennzeichnet, dass** die Basis (B(i), B(i+1)) wenigstens einer der beiden Mitgliedschaufelreihen eine parallelogrammartige oder rechteckige Form aufweist.

9. Schaufelreihenbaugruppe nach einem der vorangehenden Ansprüche, **dadurch gekennzeichnet, dass** eine hintere Basiskante (HBK(i)) der vorderen Basis (B(i)) und eine vordere Basiskante (VBK(i+1)) der hinteren Basis (B(i+1)) entlang wenigstens eines Teils des Umfangs bei veränderlicher axialer Position verlaufen.

10. Schaufelreihenbaugruppe nach einem der vorangehenden Ansprüche, **dadurch gekennzeichnet, dass** eine vordere Basiskante (VBK(i)) der vorderen Basis (B(i)) und/oder eine hintere Basiskante (HBK(i+1)) der hinteren Basis (B(i+1)) in Umfangsrichtung gänzlich bei konstanter Axialposition verläuft.

11. Schaufelreihenbaugruppe nach einem der vorangehenden Ansprüche, **dadurch gekennzeichnet, dass** der Verlauf einer hinteren Basiskante HBK(i) der vorderen Basis (B(i)) und/oder einer vorderen Basiskante VBK(i+1) der hinteren Basis (B(i+1)) polygonzugartig oder geradlinig ausgebildet ist.

12. Schaufelreihenbaugruppe nach einem der vorangehenden Ansprüche, **dadurch gekennzeichnet, dass** wenigstens an einer der Hauptströmungspfadberandungen (HB) die Hinterkante (HK(i)) einer Schaufel (i) der vorderen Schaufelgruppe in der durch die Axialrichtung x und die Radialrichtung r gebildeten Meridionalebene stromabwärts der Vorderkante (VK(i+1)) einer Schaufel (i+1) der hinteren Schaufelgruppe angeordnet ist.

13. Schaufelreihenbaugruppe nach einem der vorangehenden Ansprüche, **dadurch gekennzeichnet, dass** bei Betrachtung senkrecht zur gaspfadseitigen Oberfläche der Hauptströmungspfadberandung (HB) die Basis (B(i)) einer Schaufel (i) der einen Reihe wenigstens teilweise in die Basis (B(i+1)) einer Schaufel (i+1) der anderen Reihe eingebettet ist.

14. Schaufelreihengruppe nach einem der vorangehenden Ansprüche, **dadurch gekennzeichnet, dass** die Basis (B(i), B(i+1)) durch einen einzelnen Schaufelfuß oder durch ein über mehrere Schaufeln einer Statorschaufelreihe gehendes Ringsegment oder durch einen über alle Schaufeln einer Statorschaufelreihe gehenden Vollring gebildet wird.

## Claims

1. Blade row group arrangeable in a main flow path of a fluid-flow machine and including N adjacent member blade rows firmly arranged relative to one another in both the meridional direction (m) and the circumferential direction (u), wherein
- the number N of the member blade rows is greater than/ equal to 2 and (i) designates the running index with values between 1 and N,
- a front member blade row with front blades (i) having a leading edge VK(i) and a trailing edge HK(i) as well as a rear member blade row with rear blades (i+1) having a leading edge VK(i+1) and a trailing edge HK(i+1) are provided in the meridional plane established by the axial direction (x) and the radial direction (r),
- the blade row group has two main flow path boundaries (HB), and
- the blade profile of the blades (i, i+1) of the member blade rows is firmly connected at at least one of the two main flow path boundaries (HB) to a base (B(i), B(i+1)), wherein at least one blade profile of a blade (i, i+1) of one of the two member blade rows extends beyond its base (B(i), B(i+1)), at least where it adjoins the main flow path boundary (HB), and also protrudes onto the base (B(i), B(i+1)) of at least one blade (i, i+1) of the other of the two member blade rows,
**characterized in that**
(a) the base (B(i), B(i+1)) of at least one blade (i, i+1) of one of the member blade rows is provided by a blade root, which is formed substantially by an extension of at least part of the blade profile beyond the main flow path boundary (HB), wherein the bases (B(i), B(i+1)) of the blades (i, i+1) of a front and a rear member blade row are connected to one another,
(b) the bases (B(i), B(i+1)) of two adjacent member blade rows adjoin one another along at least part of the circumference of the fluid-flow machine.

2. Blade row group in accordance with Claim 1, **characterized in that** the base (B(i), B(i+1)) of at least one blade (i, i+1) of one of the member blade rows is provided by a blade root, which is formed substantially by an extension of at least part of the blade profile beyond the main flow path boundary (HB), wherein the bases (B(i), B(i+1)) of the blades (i, i+1) of a front and a rear member blade row are connected to one another by a press-fit type of joint of the one base inside the other base.

3. Blade row group in accordance with Claim 1, **characterized in that** the bases (B(i), B(i+1)) of the member blade rows, in the plane established by the meridional coordinate (m) and the circumferential coordinate (u), each have an extent greater than the extension of the blade profile of the blades (i, i+1).

4. Blade row group in accordance with one of the preceding Claims, **characterized in that** a front base edge (VBK(i+1)) of the rear base (B(i+1)) is provided axially upstream of a rear base edge HBK(i) of the front base (B(i)) along at least part of the circumference of the fluid-flow machine.

5. Blade row group in accordance with one of the preceding Claims, **characterized in that** a gap (S) is provided between the projecting part (X) of the blade profile of the one member blade row and the base (B(i), B(i+1)) of the other member blade row.

6. Blade row group in accordance with one of the Claims 1 to 4, **characterized in that** the projecting part (X) of the blade profile of the one member blade row is in contact with the base (B(i), B(i+1)) of the other member blade row, and accordingly no gap is provided between the projecting part (X) and this base.

7. Blade row group in accordance with one of the preceding Claims, **characterized in that** a rear base edge HBK(i) of the front base (B(i)) and a front base edge VBK(i+1) of the rear base (B(i+1)) extend along at least part of the circumference with a constant axial position.

8. Blade row group in accordance with Claim 7, **characterized in that** the base (B(i), B(i+1)) of at least one of the two member blade rows has a parallelogram-like or a rectangular shape.

9. Blade row group in accordance with one of the preceding Claims, **characterized in that** a rear base edge (HBK(i)) of the front base (B(i)) and a front base edge (VBK(i+1)) of the rear base (B(i+1)) extend along at least part of the circumference with a variable axial position.

10. Blade row group in accordance with one of the preceding Claims, **characterized in that** a front base edge (VBK(i)) of the front base (B(i)) and/or a rear base edge (HBK(i+1)) of the rear base (B(i+1)) extend in the circumferential direction completely with a constant axial position.

11. Blade row group in accordance with one of the preceding Claims, **characterized in that** the course of a rear base edge HBK(i) of the front base (B(i)) and/ or of a front base edge VBK(i+1) of the rear base (B(i+1)) is designed as a polygonal line or as a straight.

12. Blade row group in accordance with one of the preceding Claims, **characterized in that** at least at one of the main flow path boundaries (HB) the trailing edge (HK(i)) of a blade (i) of the front blade group, in the meridional plane established by the axial direction x and the radial direction r, is arranged downstream of the leading edge (VK(i+1)) of a blade (i+1) of the rear blade group.

13. Blade row group in accordance with one of the preceding Claims, **characterized in that** in a view perpendicular to the gas path-side surface of the main flow path boundary (HB), the base (B(i)) of a blade (i) of the one row is at least partially embedded into the base (B(i+1)) of a blade (i+1) of the other row.

14. Blade row group in accordance with one of the preceding Claims, **characterized in that** the base (B(i), B(i+1)) is formed by a single blade root or by a ring segment extending over several blades of a stator blade row or by a complete ring extending over all blades of a stator blade row.

## Revendications

1. Groupe de rangées d'aubes pouvant être disposé dans un chemin d'écoulement principal d'une turbomachine et se composant de N rangées d'aubes membres voisines et disposées de façon fixe l'une par rapport à l'autre aussi bien en direction méridienne (m) qu'en direction périphérique (u), dans lequel
- le nombre N des rangées d'aubes membres est supérieur ou égal à 2 et (i) désigne l'indice courant avec des valeurs entre 1 et N,
- dans le plan méridien formé par la direction axiale (x) et la direction radiale (r), il y a une rangée d'aubes membres antérieure avec des aubes antérieures (i) avec un bord d'attaque VK(i) et un bord de fuite HK(i) ainsi qu'une rangée d'aubes membres postérieure avec des aubes postérieures (i+1) avec un bord d'attaque VK(i+1) et un bord de fuite HK(i+1),
- le groupe de rangées d'aubes présente deux bordures de chemin d'écoulement principal (HB) et
- le profil d'aube des aubes (i, i+1) des rangées d'aubes membres sur au moins une des deux bordures de chemin d'écoulement principal (HB) est assemblé de façon fixe à une base (B(i), B(i+1)) dans lequel au moins un profil d'aube d'une aube (i, i+1) d'une des deux rangées d'aubes membres est saillant au-dessus de sa base (B(i), B(i+1)) au moins à proximité de la bordure de chemin d'écoulement principal (HB) et atteint en l'occurrence la base (B(i), B(i+1)) d'au moins une aube (i, i+1) de l'autre des deux rangées d'aubes membres,
**caractérisé en ce que**
a) la base (B(i), B(i+1)) d'au moins une aube (i, i+1) d'une des rangées d'aubes membres est fournie par un pied d'aube, qui est formé essentiellement par un prolongement d'au moins une partie du profil d'aube au-delà de la bordure de chemin d'écoulement principal (HB), dans lequel les bases (B(i), B(i+1)) des aubes (i, i+1) d'une rangée d'aubes membres antérieure et postérieure sont assemblées l'une à l'autre,
et/ou
(b) les bases (B(i), B(i+1)) de deux rangées d'aubes membres voisines sont appliquées l'une sur l'autre le long d'au moins une partie de la périphérie de la turbomachine.

2. Groupe de rangées d'aubes selon la revendication 1, **caractérisé en ce que** la base (B(i), B(i+1)) d'au moins une aube (i, i+1) d'une des rangées d'aubes membres est fournie par un pied d'aube, qui est formé essentiellement par un prolongement d'au moins une partie du profil d'aube au-delà de la bordure de chemin d'écoulement principal (HB), dans lequel les bases (B(i), B(i+1)) des aubes (i, i+1) d'une rangée d'aubes membres antérieure et postérieure sont assemblées l'une à l'autre par une jonction à ajustement serré d'une base dans l'autre base.

3. Groupe de rangées d'aubes selon la revendication 1, **caractérisé en ce que** les bases (B(i), B(i+1)) des rangées d'aubes membres présentent respectivement, dans le plan formé par les coordonnées méridiennes (m) et les coordonnées périphériques (u), une extension qui est plus grande que le prolongement du profil d'aube des aubes (i, i+1).

4. Groupe de rangées d'aubes selon l'une quelconque des revendications précédentes, **caractérisé en ce qu'**il est prévu un bord d'attaque de base (VBK(i+1)) de la base postérieure (B(i+1)) le long d'au moins une partie de la périphérie de la turbomachine axialement en amont d'un bord de fuite de base HKB(i) de la base antérieure (B(i)).

5. Groupe de rangées d'aubes selon l'une quelconque des revendications précédentes, **caractérisé en ce qu'**il est prévu une fente (S) entre la partie saillante (X) du profil d'aube d'une première rangée d'aubes membres et la base (B(i), B(i+1)) de l'autre rangée d'aubes membres.

6. Groupe de rangées d'aubes selon l'une quelconque des revendications 1 à 4, **caractérisé en ce que** la partie saillante (X) du profil d'aube de la première rangée d'aubes membres est en contact avec la base (B(i), B(i+1)) de l'autre rangée d'aubes membres et il n'est par conséquent pas prévu de fente entre la partie saillante (X) et cette base.

7. Groupe de rangées d'aubes selon l'une quelconque des revendications précédentes, **caractérisé en ce qu'**un bord de fuite de base HBK(i) de la base antérieure (B(i)) et un bord d'attaque de base VBK(i+1) de la base postérieure (B(i+1)) s'étendent le long d'au moins une partie de la périphérie pour une position axiale constante.

8. Groupe de rangées d'aubes selon la revendication 7, **caractérisé en ce que** la base (B(i), B(i+1)) d'au moins une des deux rangées d'aubes membres présente une forme de parallélogramme ou de rectangle.

9. Groupe de rangées d'aubes selon l'une quelconque des revendications précédentes, **caractérisé en ce qu'**un bord de fuite de base (HBK(i)) de la base antérieure (B(i)) et un bord d'attaque de base (VBK(i+1)) de la base postérieure (B(i+1)) s'étendent le long d'au moins une partie de la périphérie pour une position axiale variable.

10. Groupe de rangées d'aubes selon l'une quelconque des revendications précédentes, **caractérisé en ce qu'**un bord d'attaque de base (VBK(i)) de la base antérieure (B(i)) et/ou un bord de fuite de base (HBK(i+1)) de la base postérieure (B(i+1)) s'étend entièrement dans la direction axiale pour une position axiale constante.

11. Groupe de rangées d'aubes selon l'une quelconque des revendications précédentes, **caractérisé en ce que** le tracé d'un bord de fuite de base HBK(i) de la base antérieure (B(i)) et/ou d'un bord d'attaque de base VBK(i+1) de la base postérieure (B(i+1)) est de forme polygonale ou rectiligne.

12. Groupe de rangées d'aubes selon l'une quelconque des revendications précédentes, **caractérisé en ce qu'**au moins sur une des bordures de chemin d'écoulement principal (HB) le bord de fuite (HK(i)) d'une aube (i) du groupe d'aubes antérieur est disposé dans le plan méridien formé par la direction axiale x et la direction radiale r en aval du bord d'attaque (VBK (i+1)) d'une aube (i+1) du groupe d'aubes postérieur.

13. Groupe de rangées d'aubes selon l'une quelconque des revendications précédentes, **caractérisé en ce qu'**en regardant perpendiculairement à la surface côté chemin du gaz de la bordure de chemin d'écoulement principal (HB) la base (B(i)) d'une aube (i) d'une première rangée est noyée au moins en partie dans la base (B(i+1)) d'une aube (i+1) de l'autre rangée.

14. Groupe de rangées d'aubes selon l'une quelconque des revendications précédentes, **caractérisé en ce que** la base (B(i), B(i+1)) est formée par un pied d'aube individuel ou par un segment d'anneau s'étendant sur plusieurs aubes d'une rangée d'aubes de stator ou par un anneau complet s'étendant sur toutes les aubes d'une rangée d'aubes de stator.
